# EUROPÄISCHE PATENTSCHRIFT

(11) **EP 2 151 157 B1**
(45) Veröffentlichungstag und Bekanntmachung des Hinweises auf die Patenterteilung: **02.03.2011**
(21) Anmeldenummer: 08014188.0
(22) Anmeldetag: 08.08.2008
(51) Int. Cl.: A01G 3/037

(54) **Astschere**
Branch shears
Sécateur

(43) Veröffentlichungstag der Anmeldung: 10.02.2010
(73) Patentinhaber: Metabowerke GmbH, 72622 Nürtingen (DE)
(72) Erfinder: Wilke, Dirk, 72582 Grabenstetten (DE)
(74) Vertreter: Raunecker, Klaus Peter

(56) Entgegenhaltungen:
- WO-A-2007/059544
- CH-A- 457 015
- US-A- 1 687 212

## Beschreibung

Die vorliegende Erfindung betrifft eine Astschere, umfassend ein erstes Scherenteil und ein relativ zu dem ersten Scherenteil bewegbares zweites Scherenteil, einen Motor und ein Getriebe zum Antrieb mindestens eines Scherenteils.

Motorisch angetriebene Astscheren ermöglichen ein komfortables Abtrennen von Baum- oder Strauchästen. Üblicherweise sind motorisch angetriebene Astscheren im Hinblick auf eine bevorzugte Verwendung dimensioniert. Kleinere Geräte sind eher für dünne Äste und Strauchwerk geeignet. Diese Geräte sind vergleichsweise leicht und lassen sich daher gut handhaben, sind jedoch in ihrer Schnittkraft begrenzt und zum Abtrennen dickerer Äste ungeeignet. Die WO 2007/059544 zeigt eine Astschere mit den Merkmalen des Oberbegriffs des Anspruchs 1. Größere Geräte ermöglichen auch das Abtrennen dicker Äste, sind aufgrund ihres vergleichsweise hohen Gewichts jedoch schwieriger handhabbar.

Die CH457015 zeigt eine mit einem Druckmedium arbeitende Astschere, mit zwei unterschiedlichen Kraft-Geschwindigkeit Verhältnisse des bewegbares Scherenteil.

Hiervon ausgehend liegt der vorliegenden Erfindung die Aufgabe zugrunde, eine Astschere zu schaffen, welche möglichst universell einsetzbar ist.

Diese Aufgabe wird bei einer Astschere der eingangs genannten Art dadurch gelöst, dass das Getriebe zur Bereitstellung von mindestens zwei unterschiedlichen Übersetzungsverhältnissen in mindestens zwei Schaltstufen betreibbar ist.

Durch die Bereitstellung von mindestens zwei unterschiedlichen Übersetzungsverhältnissen ist es möglich, eine Antriebsbewegung des Motors so zu übersetzen, dass sich die Scherenteile in einer ersten Schaltstufe mit einer niedrigeren Geschwindigkeit bewegen, wobei jedoch eine höhere Schnittkraft zur Verfügung gestellt wird. In einer zweiten Schaltstufe können die Scherenteile schneller bewegt werden, wobei von den Scherenteilen eine niedrigere Schnittkraft auf einen abzutrennenden Ast ausgeübt wird. Dadurch dass das Getriebe in mindestens zwei Schaltstufen betreibbar ist, kann ein vergleichsweise leichtes und kompaktes Gerät geschaffen werden, welches ein schnelles Abtrennen dünnerer Äste und von Strauchwerk ermöglicht, gleichzeitig jedoch bei Bedarf genügend hohe Schnittkräfte zum Abtrennen größerer Äste bereitstellen kann. Hierdurch kann das Einsatzgebiet der erfindungsgemäßen Astschere gegenüber bekannten Astscheren erheblich erweitert werden.

Eine besonders robuste Astschere ergibt sich, wenn di Schaltstufen diskret schaltbar sind. Hierbei korrespondiert jede Schaltstufe mit einem vorbestimmten Übersetzungsverhältnis. Die Schaltstufen können auch als "Gänge" des Getriebes bezeichnet werden, wobei erfindungsgemäß mindestens zwei Gänge vorgesehen sind. Eine diskret schaltbare Ausführung der Schaltstufen ermöglicht es, in jede der Schaltstufen einen formschlüssigen Kraftschluss zwischen dem Motor und mindestens einem angetriebenen Scherenteil herstellen zu können.

Vorzugsweise umfasst das Getriebe miteinander in Serie geschaltete oder schaltbare Getriebestufen. Eine Getriebestufe ermöglicht es, eine an der Getriebestufe anliegende Eingangsbewegung in eine hinsichtlich ihres Betrags und/oder ihrer Richtung abweichende Ausgangsbewegung zu übersetzen. Hierzu verhalten sich die an einer Getriebestufe anliegenden Eingangs- und Ausgangsmomente umgekehrt proportional. In Serie geschaltete oder schaltbare Getriebestufen ermöglichen es, ein relativ kompaktes Getriebe zu schaffen, welches eine schnelle Getriebeeingangsbewegung in eine langsame Getriebeausgangsbewegung umsetzt und somit ein vergleichsweise niedriges Getriebeeingangsmoment in ein vergleichsweise hohes Getriebeausgangsmoment zu überführen.

Besonders bevorzugt ist es, wenn das Getriebe mindestens eine schaltbare Getriebestufe aufweist, welche in einer ersten Schaltstufe aktiviert und in einer zweiten Schaltstufe deaktiviert ist. Dies ermöglicht eine besonders einfache Bereitstellung unterschiedlicher Übersetzungsverhältnisse bei einem kompakten Aufbau des Getriebes.

Bevorzugt ist es ferner, wenn das Getriebe mindestens eine als Planetengetriebe ausgebildete Getriebestufe umfasst. Ein solches Planetengetriebe ermöglicht die Übertragung einer Drehbewegung über eine Anzahl der Planetenräder entsprechende Anzahl von Kraftübertragungsstellen. Hierdurch kann ein robustes und langlebiges Getriebe bereitgestellt werden.

Bevorzugt ist es ferner, wenn die Astschere eine Betätigungseinrichtung zur manuellen Auswahl einer Schaltstufe aufweist. Dies hat den Vorteil, dass eine Bedienperson entscheiden kann, ob sich die Scherenteile bei geringerer Schnittkraft mit höherer Geschwindigkeit oder bei höherer Schnittkraft mit geringerer Geschwindigkeit bewegen sollen.

Ein besonders einfacher Aufbau der Astschere ergibt sich, wenn die Betätigungseinrichtung mechanisch mit einer schaltbaren Getriebestufe des Getriebes gekoppelt oder koppelbar ist. Auf diese Weise ist es möglich, eine Bewegung eines Betätigungselements in eine Bewegung eines Getriebeelements einer schaltbaren Getriebestufe umzuwandeln, ohne hierfür zusätzliche Bauteile, beispielsweise in Form von Stellern oder Aktoren, einsetzen zu müssen.

Nach einer Ausführungsform der Erfindung ist vorgesehen, dass das Getriebe eine Getriebeeingangsachse und eine hierzu kollineare Getriebeausgangsachse aufweist. Hierdurch kann ein vergleichsweise schlank bauendes Getriebe bereitgestellt werden.

Ferner ist es bevorzugt, wenn der Motor eine Motorabtriebsachse aufweist und wenn das Getriebe eine hierzu kollinear Getriebeeingangsachse aufweist. Auf diese Weise wird erreicht, dass eine Motor-/Getriebeeinheit geschaffen werden kann, welche in zu der Motorabtriebsachse beziehungsweise Getriebeeingangsachse radialer Richtung wenig Bauraum beansprucht.

Vorzugsweise ist der Motor in einander entgegengesetzten Drehrichtungen betreibbar, wobei eine erste Drehrichtung mit einem Öffnen der Scherenteile und eine zweite Drehrichtung mit einem Schließen der Scherenteile korrespondiert. Dies hat den Vorteil, dass eine Bewegungsrichtungsumkehr der Scherenteile durch einfaches Umsteuern des Motors erfolgen kann.

Besonders bevorzugt ist es, wenn der Motor ein Elektromotor ist, so dass eine leichte und emissionsfreie Astschere bereitgestellt werden kann. Vorzugsweise wird die elektrische Energie für den Elektromotor durch einen Akkumulator bereitgestellt.

Besonders bevorzugt ist es, wenn der Motor unabhängig von einer ausgewählten Schaltstufe des Getriebes mit derselben Motordrehzahl betreibbar ist. Dies ermöglicht eine besonders einfache Ansteuerung des Motors, welcher in einem für den Motor optimalen Betriebspunkt betrieben werden kann.

Die Erfindung betrifft ferner ein Verfahren zum Betrieb einer vorstehend beschriebenen Astschere, welche sich dadurch kennzeichnet, dass der Motor unabhängig von einer ausgewählten Schaltstufe des Getriebes mit derselben Motordrehzahl betrieben wird.

Weitere Merkmale und Vorteile der Erfindung sind Gegenstand der nachfolgenden Beschreibung und der zeichnerischen Darstellung eines bevorzugten Ausführungsbeispiels.

In den Zeichnungen zeigen:
- Figur 1: eine schematisierte Seitenansicht einer Ausführungsform einer Astschere;
- Figur 2: einen Längsschnitt durch die Astschere gemäß Figur 1, wobei ein Getriebe der Astschere in einer ersten Schaltstufe dargestellt ist; und
- Figur 3: eine der Figur 2 entsprechende Ansicht, wobei das Getriebe in einer zweiten Schaltstufe dargestellt ist.

Gleiche oder funktional äquivalente Elemente sind in allen Figuren mit denselben Bezugszeichen bezeichnet.

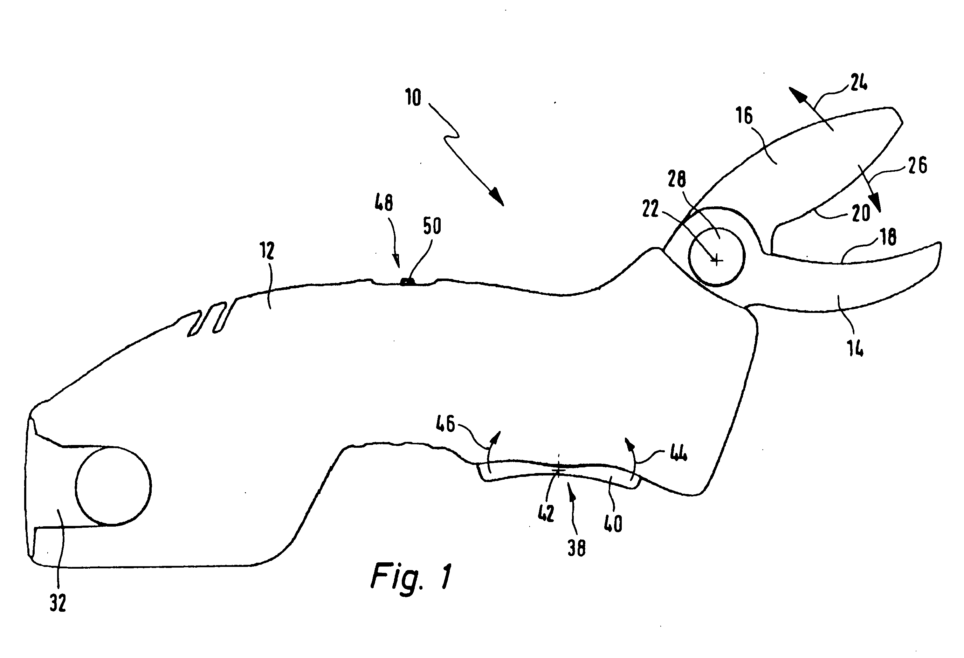

Ein Ausführungsbeispiel einer mit 10 bezeichneten Astschere ist in den Figuren 1 bis 3 dargestellt. Die Astschere 10 weist ein Gehäuse 12 auf. Die Astschere 10 weist ferner ein erstes Scherenteil 14 auf, welches insbesondere gehäusefest ist. Ferner umfasst die Astschere 10 ein zweites Scherenteil 16. Das erste Scherenteil 14 weist eine erste Schneidkante 18 auf; das zweite Scherenteil 16 weist eine zweite Schneidkante 20 auf.

Das zweite Scherenteil 16 ist relativ zu dem ersten Scherenteil 14 um eine Schwenkachse 22 verschwenkbar. Hierbei kann das zweite Scherenteil 16 so bewegt werden, dass sich die zweite Schneidkante 20 in einer Öffnungsrichtung 24 von der ersten Schneidkante 18 des ersten Scherenteils 14 weg bewegt oder dass sich die zweite Schneidkante 20 in einer Schließrichtung 26 in Richtung auf die erste Schneidkante 18 des ersten Scherenteils 14 zu bewegt. Bei einer Bewegung des zweiten Scherenteils 16 verschwenkt dieses um einen gehäusefesten Bolzen 28.

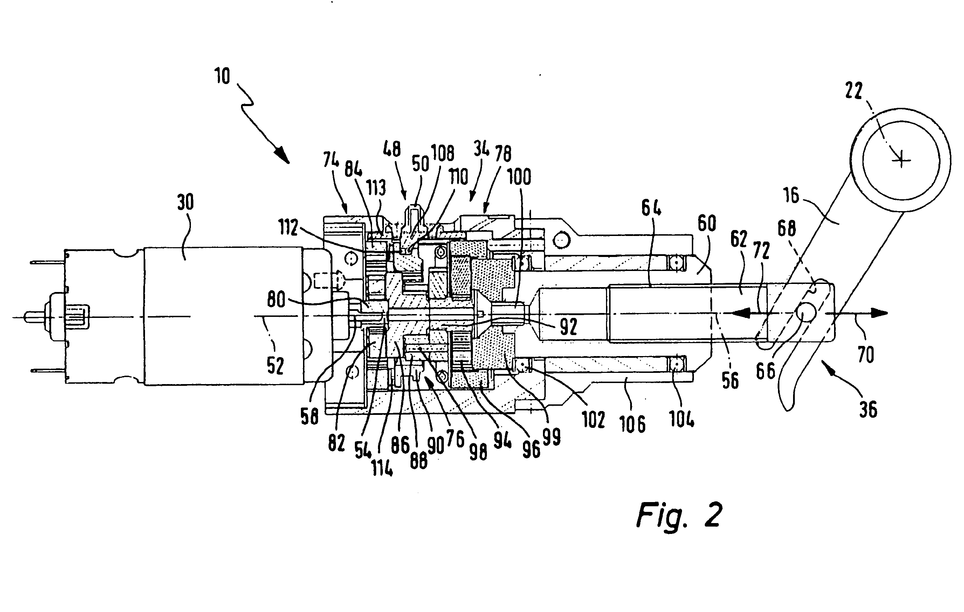

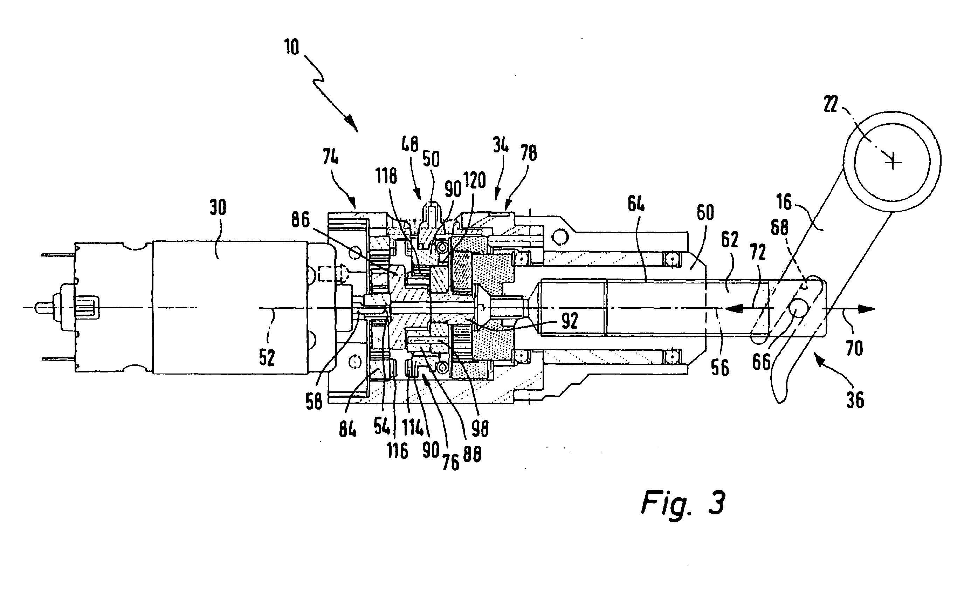

Zum Antrieb des zweiten Scherenteils 16 umfasst die Astschere 10 einen Motor 30 in Form eines Elektromotors (vergleiche Figuren 2 und 3). Der Motor 30 wird mit Hilfe eines Akkumulators 32 (vergleiche Figur 1) mit elektrischer Energie versorgt. Der Akkumulator 32 ist insbesondere lösbar mit dem Gehäuse 12 verbunden.

Die Astschere 10 umfasst ferner ein in den Figuren 2 und 3 insgesamt mit 34 bezeichnetes Getriebe, welches eine Bewegung des Motors 30 auf einen Antriebsabschnitt 36 des zweiten Scherenteils 16 überträgt.

Zum Ein- und Ausschalten des Motors 30 sowie zur Auswahl einer Drehrichtung des Motors 30 umfasst die Astschere 10 eine Steuereinrichtung 38, welche insbesondere einen Wippschalter 40 umfasst. Der Wippschalter 40 ist um eine Wippschalterachse 42 verschwenkbar. Der Wippschalter 40 kann in einer ersten Betätigungsrichtung 44 betätigt werden, welche mit einer ersten Drehrichtung des Motors 30 korrespondiert. Der Wippschalter 40 kann ferner in einer zweiten Betätigungsrichtung 46 betätigt werden, welche mit einer zu der ersten Drehrichtung des Motors 30 entgegengesetzten zweiten Drehrichtung des Motors 30 korrespondiert. Ferner kann der Wippschalter 40 eine in der Figur 1 dargestellte Ruhelage einnehmen, in welchem der Motor 30 stromlos geschaltet ist.

Die Astschere 10 weist ferner eine Betätigungseinrichtung 48 auf, mittels welcher ein mit Hilfe des Getriebes 34 bereitgestelltes Übersetzungsverhältnis einstellbar ist. Insbesondere umfasst die Betätigungseinrichtung 48 einen Handschalter 50, welcher von einer Bedienperson ergriffen und in verschiedene Stellungen gebracht werden kann, welche mit unterschiedlichen Übersetzungsverhältnissen des Getriebes 34 korrespondieren.

Unter weiterer Bezugnahme auf die Figuren 2 und 3 wird im Folgenden der Aufbau des Getriebes 34 näher beschrieben. Der Motor 30 weist eine Motorabtriebsachse 52 auf, welche kollinear zu einer Getriebeeingangsachse 54 des Getriebes 34 angeordnet ist. Das Getriebe 34 weist an seinem dem Antriebsabschnitt 36 des zweiten Scherenteils 16 zugewandten Ende eine Getriebeausgangsachse 56 auf, welche kollinear mit der Getriebeeingangsachse 54 ist.

Das Getriebe 34 setzt eine Drehbewegung einer um die Motorabtriebsachse 52 rotierenden Motorausgangswelle 58 in eine vorzugsweise langsamere Drehbewegung eines Antriebskörpers 60 um. In dem Antriebskörper 60 ist ein stangenförmiges Antriebselement 62 gelagert, welches über eine Gewindepaarung 64 mit dem Antriebskörper 60 zusammenwirkt. Das Antriebselement 62 erstreckt sich parallel zu der Getriebeausgangsachse 56 und ist entlang dieser Achse antreibbar. Das Antriebselement 62 weist an seinem dem zweiten Scherenteil 16 zugewandten Ende einen Antriebsbolzen 66 auf, welcher in eine an dem Antriebsabschnitt 36 des zweiten Scherenteils 16 angeordnete Kulisse 68 greift. Der Antriebsbolzen 66 ist gemeinsam mit dem Antriebselement 62 entlang der Getriebeausgangsachse 56 in einer ersten Richtung 70 oder in einer hierzu entgegengesetzten zweiten Richtung 72 antreibbar.

Bei Bewegung des Antriebsbolzens 66 in der ersten Richtung 70 wird das zweite Scherenteil 16 um die Schwenkachse 22 in Öffnungsrichtung 24 verschwenkt. Bei Bewegung des Antriebsbolzens 66 in der zweiten Richtung 72 wird das zweite Scherenteile 16 um die Schwenkachse 22 in Schließrichtung 26 verschwenkt.

Das Getriebe 34 weist mehrere Getriebestufen auf, welche miteinander in Serie geschaltet oder schaltbar sind. Im Einzelnen umfasst das Getriebe 34 eine erste Getriebestufe 74, welche direkt mit der Motorausgangswelle 58 zusammenwirkt. Ferner umfasst das Getriebe 34 eine zweite Getriebestufe 76, welche der ersten Getriebestufe 74 nachgeschaltet und einer dritten Getriebestufe 78 vorgeschaltet ist.

Die erste Getriebestufe 74 umfasst ein erstes Sonnenrad 80, erste Planetenräder 82 sowie ein erstes Hohlrad 84.

Die zweite Getriebestufe 76 umfasst ein zweites Sonnenrad 86, zweite Planetenräder 88 sowie ein zweites Hohlrad 90.

Die dritte Getriebestufe 78 umfasst ein drittes Sonnenrad 92, dritte Planetenräder 94 sowie ein drittes Hohlrad 96.

Die ersten Planetenräder 82 der ersten Getriebestufe 74 sind um den Planetenrädern 82 zugeordnete Achsen drehbar, welche mit dem zweiten Sonnenrad 86 der zweiten Getriebestufe 76 verbunden sind. In entsprechender Weise drehen die zweiten Planetenräder 88 der zweiten Getriebestufe 76 um Achsen, welche fest mit dem dritten Sonnenrad 92 der dritten Getriebestufe 78 verbunden sind. In dem in den Figuren 2 und 3 dargestellten Längsschnitt ist eine dieser Achsen sichtbar und mit dem Bezugszeichen 98 bezeichnet.

Die dritten Planetenräder 94 der dritten Getriebestufe 78 drehen um Achsen, welche fest mit einem Drehkörper 99 verbunden sind. Der Drehkörper 99 und der Antriebskörper 60 bilden eine Einheit, welche insbesondere mit einer Schraube 100 drehfest miteinander verbunden sind. Die aus dem Drehkörper 99, dem Antriebskörper 60 und der Schraube gebildete Einheit ist über Drehlager 102, 104 drehbar in einem Lagerkörper 106 gelagert. Der Lagerkörper 106 ist Teil des Gehäuses 12 der Astschere oder ist fest mit diesem verbunden.

Die zweite Getriebestufe 76 des Getriebes 34 ist schaltbar, so dass sie in einen aktivierten Zustand (Figur 2) und in einen deaktivierten Zustand (Figur 3) überführbar ist. Zum Schalten der Getriebestufe 76 weist die Betätigungseinrichtung 48 einen fest mit dem Handschalter 50 verbundenen Übertragungskörper 108 auf, welcher einen Ringbund 110 aufweist. Der Ringbund 110 greift in eine Ringnut 112 des zweiten Hohlrads 90 der zweiten Getriebestufe 76. Durch Überführung des Handschalters aus der in Figur 2 dargestellten Stellung in die in Figur 3 dargestellte Stellung kann auf diese Weise das zweite Hohlrad 90 in zu den Getriebeachsen 54, 56 paralleler Richtung verschoben werden.

Unter Bezugnahme auf Figur 2 wird im Folgenden ein Betrieb der Astschere 10 in einer ersten Schaltstufe beschrieben, in welcher das zweite Scherenteil 16 im Vergleich zu der in Figur 3 dargestellten zweiten Schaltstufe langsamer bewegt wird, wobei jedoch eine höhere Schnittkraft auf einen zwischen den Schneidkanten 16 und 18 zu positionierenden Ast wirkt. In der ersten Schaltstellung wird eine Drehbewegung der Motorausgangswelle 58 auf die ersten Planetenräder 82 der ersten Getriebestufe 74 übertragen. Die ersten Planetenräder 82 wälzen auf dem ersten Hohlrad 84 ab, welches über eine sich parallel zu den Getriebeachsen 54, 56 erstreckende Nut 113 drehfest gehalten ist. Die ersten Planetenräder 82 treiben über ihre zugeordneten Achsen das zweite Sonnenrad 86 der zweiten Getriebestufe 76 an. Das zweite Sonnenrad 86 wiederum treibt die zweiten Planetenräder 88 an, welche an dem zweiten Hohlrad 90 der zweiten Getriebestufe 76 abwälzen. Das zweite Hohlrad 90 ist in der ersten Schaltstufe drehfest. Zur Sicherung des zweiten Hohlrads 90 gegen eine Verdrehung weist das zweite Hohlrad 90 Verdrehsicherungen 114 auf, welche in Richtung auf das erste Hohlrad 84 der ersten Getriebestufe 74 weisen. Das erste Hohlrad 84 wiederum weist dem zweiten Hohlrad 90 zugewandte Verdrehsicherungen 116 auf (vergleiche Figur 3), so dass die Verdrehsicherungen 114 und 116 miteinander in Eingriff gebracht werden können (vergleiche Figur 2).

In der in Figur 2 dargestellten ersten Schaltstufe wird die Bewegung der zweiten Planetenräder 88 über die Achsen 98 auf das dritte Sonnenrad 92 übertragen. Hiervon ausgehend wird die Bewegung des dritten Sonnenrades 92 über die Planetenräder 94 mit Hilfe den Planetenrädern 94 zugeordnete Achsen auf den Drehkörper 99 übertragen. Hierbei wälzen die dritten Planetenräder 94 an dem gehäusefesten dritten Hohlrad 96 ab.

In der in Figur 2 dargestellten ersten Schaltstufe ist die zweite Getriebestufe 76 also "aktiv", so dass eine Drehbewegung des Motors 30 über alle drei Getriebestufen 74, 76, 78 hinweg übertragen wird. Hierbei kann eine Drehzahl des Motors 30 beispielsweise um den Faktor 50 bis 150, insbesondere beispielsweise um den Faktor von ungefähr 100, verkleinert und ein von dem Motor 30 abgegebenes Drehmoment um einen entsprechenden Faktor vergrößert werden.

In der in Figur 3 dargestellten zweiten Schaltstufe ist die zweite Getriebestufe 76 deaktiviert. Hierbei ist das Hohlrad 90 gegenüber der in Figur dargestellten Stellung so weit verschoben, dass die Verdrehsicherungen 114 und 116 außer Eingriff miteinander geraten. Ferner gelangt eine Innenverzahnung 118 des zweiten Hohlrads 90 in der zweiten Schaltstufe in Eingriff mit einer an dem dritten Sonnenrad 92 ausgebildeten Außenverzahnung 120. Auf diese Weise wird eine Drehbewegung der zweiten Planetenräder 88 um das zweite Sonnenrad 86 und relativ zu dem zweiten Hohlrad 90 verhindert. Dies hat zur Folge, dass eine mit Hilfe der ersten Getriebestufe 74 auf das zweite Sonnenrad 86 übertragene Drehbewegung in eine Drehbewegung des dritten Sonnenrades 92 mit identischer Drehzahl übertragen wird. Hierbei sind das zweite Sonnenrad 86, die zweiten Planetenräder 88, das zweite Hohlrad 90 sowie das dritte Sonnenrad 92 miteinander "verblockt", so dass die zweite Getriebestufe 76 deaktiviert ist. Hierbei dreht sich also auch das zweite Hohlrad 90 und ist dabei mit seiner Ringnut 112 an dem Ringbund 110 der Betätigungseinrichtung 48 geführt.

Eine schaltbare Getriebestufe, also beispielsweise die zweite Getriebestufe 76, kann beispielsweise ein Übersetzungsverhältnis von 1 : 3 bereitstellen. Bei Deaktivierung einer solchen Getriebestufe wird also das zweite Scherenteil 16 schneller bewegt als bei einer Aktivierung dieser Getriebestufe. Bei einer schnelleren Bewegung des zweiten Scherenteils 16 steht an den Schneidkanten 18, 20 eine um einen entsprechenden Faktor verkleinerte Schnittkraft zur Verfügung.

Beispielsweise kann eine Astschere 10 bei Betrieb in einer zweiten Schaltstufe, in welcher mindestens eine Getriebestufe deaktiviert ist, ein Übersetzungsverhältnis von cirka 1 : 30 bereitstellen, so dass eine Drehzahl des Motors 30 um einen Faktor von ungefähr 30 verkleinert und ein um einen entsprechenden Faktor erhöhtes Drehmoment zur Verfügung gestellt werden kann.

Es versteht sich, dass die Bereitstellung verschiedener Übersetzungsverhältnisse auch bei einer Astschere 10 realisiert werden kann, welche zwei angetriebene Scherenteile aufweist, welche relativ zueinander bewegbar sind.

## Patentansprüche

1. Astschere, umfassend ein erstes Scherenteil (14) und ein relativ zu dem ersten Scherenteil (14) bewegbares zweites Scherenteil (16), einen Motor (30) und ein Getriebe (34) zum Antrieb mindestens eines Scherenteils (16, 14), **dadurch gekennzeichnet, dass** das Getriebe (34) zur Bereitstellung von mindestens zwei unterschiedlichen Übersetzungsverhältnissen in mindestens zwei Schaltstufen betreibbar ist.

2. Astschere nach Anspruch 1, **dadurch gekennzeichnet, dass** die Schaltstufen diskret schaltbar sind.

3. Astschere nach Anspruch 1 oder 2, **dadurch gekennzeichnet, dass** das Getriebe (34) miteinander in Serie geschaltete oder schaltbare Getriebestufen (74, 76, 78) umfasst.

4. Astschere nach einem der voranstehenden Ansprüche, **dadurch gekennzeichnet, dass** das Getriebe (34) mindestens eine schaltbare Getriebestufe (76) aufweist, welche in einer ersten Schaltstufe aktiviert und in einer zweiten Schaltstufe deaktiviert ist.

5. Astschere nach einem der voranstehenden Ansprüche, **dadurch gekennzeichnet, dass** das Getriebe (34) mindestens eine als Planetengetriebe ausgebildete Getriebestufe (74, 76, 78) umfasst.

6. Astschere nach einem der voranstehenden Ansprüche, **gekennzeichnet durch** eine Betätigungseinrichtung (48) zur manuellen Auswahl einer Schaltstufe.

7. Astschere nach Anspruch 6, **dadurch gekennzeichnet, dass** die Betätigungseinrichtung (48) mechanisch mit einer schaltbaren Getriebestufe (76) des Getriebes (34) gekoppelt oder koppelbar ist.

8. Astschere nach einem der voranstehenden Ansprüche, **dadurch gekennzeichnet, dass** das Getriebe (34) eine Getriebeeingangsachse (54) und eine hierzu kollineare Getriebeausgangsachse (56) aufweist.

9. Astschere nach einem der voranstehenden Ansprüche, **dadurch gekennzeichnet, dass** der Motor (30) eine Motorabtriebsachse (52) aufweist und dass das Getriebe (34) eine hierzu kollineare Getriebeeingangsachse (54) aufweist.

10. Astschere nach einem der voranstehenden Ansprüche, **dadurch gekennzeichnet, dass** der Motor (30) in einander entgegengesetzten Drehrichtungen betreibbar ist, wobei eine erste Drehrichtung mit einem Öffnen der Scherenteile (14, 16) und eine zweite Drehrichtung mit einem Schließen der Scherenteile (14, 16) korrespondiert.

11. Astschere nach einem der voranstehenden Ansprüche, **dadurch gekennzeichnet, dass** der Motor (30) ein Elektromotor ist.

12. Astschere nach einem der voranstehenden Ansprüche, **dadurch gekennzeichnet, dass** der Motor (30) unabhängig von einer ausgewählten Schaltstufe des Getriebes (34) mit derselben Motordrehzahl betreibbar ist.

13. Verfahren zum Betrieb einer Astschere nach mindestens einem der voranstehenden Ansprüche, **dadurch gekennzeichnet, dass** der Motor (30) unabhängig von einer ausgewählten Schaltstufe des Getriebes (34) mit derselben Motordrehzahl betrieben wird.

## Claims

1. Branch shears comprising a first shearing part (14) and a second shearing part (16) which is movable relative to said first shearing part (14), a motor (30) and a transmission (34) for driving at least one shearing part (16, 14), **characterised in that** the transmission (34) can be operated in at least two switching stages in order to make available at least two different transmission ratios.

2. Branch shears according to claim 1, **characterised in that** the switching stages can be switched in a discrete manner.

3. Branch shears according to claim 1 or 2, **characterised in that** the transmission (34) comprises transmission stages (74, 76, 78) which are, or can be, switched in series with one another.

4. Branch shears according to one of the preceding claims, **characterised in that** the transmission (34) has at least one switchable transmission stage (76) which is activated in a first switching stage and deactivated in a second switching stage.

5. Branch shears according to one of the preceding claims, **characterised in that** the transmission (34) comprises at least one transmission stage (74, 76, 78) which is constructed as planetary gearing.

6. Branch shears according to one of the preceding claims, **characterised by** an actuating apparatus (48) for manually selecting a switching stage.

7. Branch shears according to claim 6, **characterised in that** the actuating apparatus (48) is, or can be, coupled mechanically to a switchable transmission stage (76) of the transmission (34).

8. Branch shears according to one of the preceding claims, **characterised in that** the transmission (34) has a transmission input axis (54) and a transmission output axis (56) which is collinear with said transmission input axis.

9. Branch shears according to one of the preceding claims, **characterised in that** the motor (30) has a motor output-drive axis (52) and that the transmission (34) has a transmission input axis (54) which is collinear with said motor output-drive axis.

10. Branch shears according to one of the preceding claims, **characterised in that** the motor (30) can be operated in mutually opposite directions of rotation, a first direction of rotation corresponding to an opening of the shearing parts (14, 16) and a second direction of rotation corresponding to a closing of said shearing parts (14, 16).

11. Branch shears according to one of the preceding claims, **characterised in that** the motor (30) is an electric motor.

12. Branch shears according to one of the preceding claims, **characterised in that** the motor (30) can be operated at the same rotational speed, irrespective of a switching stage of the transmission (34) that has been selected.

13. Method of operating branch shears according to at least one of the preceding claims, **characterised in that** the motor (30) is operated at the same rotational speed, irrespective of a switching stage of the transmission (34) that has been selected.

## Revendications

1. Cisaille à élaguer, comprenant une première partie de cisaille (14) et une seconde partie de cisaille (16) mobile par rapport à la première partie de cisaille (14), un moteur (30) et une boîte de vitesses (34) servant à entraîner au moins une partie de cisaille (16, 14), **caractérisée en ce que** la boîte de vitesses (34) est agencée pour travailler dans au moins deux étages d'enclenchement pour obtenir au moins deux rapports de transmission différents.

2. Cisaille à élaguer selon la revendication 1, **caractérisée en ce que** les étages d'enclenchement peuvent être enclenchés de façon discrète.

3. Cisaille à élaguer selon la revendication 1 ou 2, **caractérisée en ce que** la boîte de vitesses (34) comprend des étages de boîte (74, 76, 78), qui sont enclenchés ou peuvent être enclenchés en série.

4. Cisaille à élaguer selon l'une des revendications précédentes, **caractérisée en ce que** la boîte de vitesses (34) comporte au moins un étage de boîte pouvant être enclenché (76) qui est activé dans un premier étage d'enclenchement et désactivé dans un second étage d'enclenchement.

5. Cisaille à élaguer selon l'une des revendications précédentes, **caractérisée en ce que** la boîte de vitesses (34) comprend au moins un étage de boîte de vitesses (74, 76, 78) constitué par un mécanisme épicycloïdal.

6. Cisaille à élaguer selon l'une des revendications précédentes, **caractérisée par** un dispositif d'actionnement (48) permettant la sélection manuelle d'un étage d'enclenchement.

7. Cisaille à élaguer selon la revendication 6, **caractérisée en ce que** le dispositif d'actionnement (48) est accouplé ou peut être accouplé mécaniquement à un étage de boîte (76) de la boîte de vitesses (34) qui peut être enclenché.

8. Cisaille à élaguer selon l'une des revendications précédentes, **caractérisée en ce que** la boîte de vitesses (34) comporte un axe d'entrée de boîte (54) et un axe de sortie de boîte (56) qui sont colinéaires.

9. Cisaille à élaguer selon l'une des revendications précédentes, **caractérisée en ce que** le moteur (30) comporte un axe de sortie du moteur (52) et **en ce que** la boîte de vitesses (34) comporte un axe d'entrée de boîte (54), ces deux axes étant colinéaires.

10. Cisaille à élaguer selon l'une des revendications précédentes, **caractérisée en ce qu'**on peut faire tourner le moteur (30) dans des sens de rotation opposés, un premier sens de rotation correspondant à l'ouverture des parties de cisaille (14, 16) et un second sens de rotation correspondant à la fermeture des parties de cisaille (14, 16).

11. Cisaille à élaguer selon l'une des revendications précédentes, **caractérisée en ce que** le moteur (30) est un moteur électrique.

12. Cisaille à élaguer selon l'une des revendications précédentes, **caractérisée en ce qu'**on peut faire tourner le moteur (30) avec la même vitesse de rotation indépendamment de l'étage d'enclenchement de la boîte de vitesses (34) qui est sélectionné.

13. Procédé d'utilisation d'une cisaille à élaguer selon au moins l'une des revendications précédentes, **caractérisé en ce que** l'on fait tourner le moteur (30) avec la même vitesse de rotation indépendamment de l'étage d'enclenchement de la boîte de vitesses (34) qui est sélectionné.
